# EUROPÄISCHE PATENTANMELDUNG

(11) **EP 2 280 164 A2**
(43) Veröffentlichungstag der Anmeldung: **02.02.2011**
(21) Anmeldenummer: 10185917.1
(22) Anmeldetag: 28.05.2003
(51) Int. Cl.: F03D 1/06

(54) **Windenergieanlage**

(30) Priorität: 05.06.2002 DE 10225136; 21.02.2003 DE 10307682
(62) Teilanmeldung aus: 06120999.5
(71) Anmelder: Wobben, Aloys, 26607 Aurich (DE)
(72) Erfinder: Wobben, Aloys, 26607 Aurich (DE)
(74) Vertreter: Göken, Klaus G.

(57) **Zusammenfassung**

Die Erfindung betrifft eine Windenergieanlage.

Aufgabe der vorliegenden Erfindung ist es, ein Rotorblatt mit einem Rotorblattprofil bzw. eine Windenergieanlage anzugeben, welches bzw. welche eine bessere Leistungsfähigkeit als bisher aufweist.

Windenergieanlage mit einem Maschinenhaus, welches einen Generator und einen mit dem Generator verbundenen Rotor aufnimmt, wobei der Rotor wenigstens zwei Rotorblätter enthält, wobei der Rotor eine Nabe aufweist, die mit einer Verkleidung (Spinner) versehen ist, wobei das Verhältnis der Profiltiefe eines Rotorblatts zum Durchmesser des Spinners einen Wert aufweist, welcher größer ist als 0,4, bevorzugt in einem Wertbereich zwischen 0,5 und 1 liegt.

## Beschreibung

Die Erfindung betrifft eine Windenergieanlage mit einem Maschinenhaus. Als Stand der Technik hierzu sei allgemein auf das Buch "Windkraftanlagen", Erich Hau, 1996, verwiesen. Dieses Buch enthält einige Beispiele für Windenergieanlagen, Rotorblätter solcher Windenergieanlagen sowie Querschnitte solcher Rotorblätter aus dem Stand der Technik. Auf Seite 102, Bild 5.34., sind die geometrischen Profilparameter von aerodynamischen Profilen gemäß NACA dargestellt. Dabei ist zu sehen, dass das Rotorblatt beschrieben wird durch eine Profiltiefe, die der Länge der Sehne entspricht, einer größten Wölbung (oder Wölbungsverhältnis) als maximale Erhebung einer Skelettlinie über der Sehne, einer Wölbungsrücklage, also dem Ort bezogen auf die Profiltiefe, wo die größte Wölbung innerhalb des Querschnittes des Rotorblattes ausgebildet ist, eine größte Profildicke als größter Durchmesser eines eingeschriebenen Kreises mit dem Mittelpunkt auf der Skelettlinie und der Dickenrücklage, also dem Ort bezogen auf die Profiltiefe, wo der Querschnitt des Rotorblatts seine größte Profildicke annimmt. Ferner werden der Nasenradius sowie die Profilkoordinaten der Unter- und Oberseite zur Beschreibung des Querschnitts des Rotorblatts herangezogen. Die aus dem Buch Erich Hau bekannte Nomenklatur soll u. a. für die weitere Beschreibung des Querschnitts eines Rotorblatts für die vorliegende Anmeldung beibehalten werden.

Rotorblätter sind anhand einer Vielzahl von Aspekten zu optimieren. Einerseits sollen sie leise sein, andererseits sollen sie auch eine maximale dynamische Leistung bereitstellen, damit bei schon recht geringem Wind die Windenergieanlage zu laufen beginnt und bei möglichst geringen Windstärken bereits die Nennwindgeschwindigkeit erreicht wird, also die Geschwindigkeit, bei welcher auch erstmals die Nennleistung der Windenergieanlage erreicht wird. Steigt dann die Windgeschwindigkeit weiter an, so wird heutzutage bei pitchregulierten Windenergieanlagen das Rotorblatt immer mehr in den Wind gestellt, so dass die Nennleistung weiter erhalten bleibt, die Angriffsfläche des Rotorblatts zum Wind jedoch abnimmt, um somit die gesamte Windenergieanlage bzw. ihre Teile vor mechanischen Schäden zu schützen. Entscheidend ist aber, dass den aerodynamischen Eigenschaften der Rotorblattprofile des Rotorblatts einer Windenergieanlage eine große Bedeutung zukommt.

Aufgabe der vorliegenden Erfindung ist es, ein Rotorblatt mit einem Rotorblattprofil bzw. eine Windenergieanlage anzugeben, welches bzw. welche eine bessere Leistungsfähigkeit als bisher aufweist.

Die Aufgabe wird erfindungsgemäß durch eine Windenergieanlage mit einem Maschinenhaus mit den Merkmalen nach einem der unabhängigen Ansprüche gelöst. Vorteilhafte Weiterbildungen sind in den abhängigen Ansprüchen beschrieben.

Die konkreten Koordinaten eines erfindungsgemäßen Rotorblattprofils nach der Erfindung sind in einer Tabelle 1 angegeben.

Die Erfindung ist nachfolgend von mehreren Zeichnungen dargestellt. Hierin zeigen:
- Fig. 1: eine Ansicht einer erfindungsgemäßen Windenergieanlage aus einer Per- spektive von vorne,
- Fig. 2: eine Ansicht einer erfindungsgemäßen Windenergieanlage aus einer Per- spektive von seitlich hinten,
- Fig. 3: die Ansicht einer erfindungsgemäßen Windenergieanlage von der Seite,
- Fig. 4-8: Ansichten eines erfindungsgemäßen Rotorblatts aus verschiedenen Rich- tungen,
- Fig. 9: eine vergrößerte Ansicht einer erfindungsgemäßen Windenergieanlage,
- Fig. 10: eine Ansicht eines erfindungsgemäßen Rotorblatts,
- Fig. 11-17 und 19: verschiedenen Ansichten einer erfindungsgemäßen Windenergieanlage, und
- Fig. 18: ein Querschnitt eines erfindungsgemäßen Rotorblatts (im nabennahen Bereich).

Das gemäß der vorliegenden Anmeldung beschriebene Rotorblattprofil ist im Besonderen in dem Bereich des Rotorblatts ausgebildet, der dem Rotorblattanschluss (zum Anschluss an die Nabe) anschließt. Bevorzugt ist das in der vorliegenden Anmeldung beschriebene Profil im ersten Drittel des Rotorblatts, bezogen auf die Gesamtlänge des Rotorblatts, ausgebildet. Die Gesamtlänge eines Rotorblatts kann hierbei durchaus im Bereich von 10 m bis 70 m liegen, je nachdem, welche Nennleistung eine Windenergieanlage haben soll. So beträgt beispielsweise die Nennleistung einer Windenergieanlage der Firma Enercon vom Typ E-112 (Durchmesser ca. 112 m) 4,5 MW, die Nenn-Leistung einer Windenergieanlage der Firma Enercon vom Typ E-30 beträgt hingegen 300 KW.

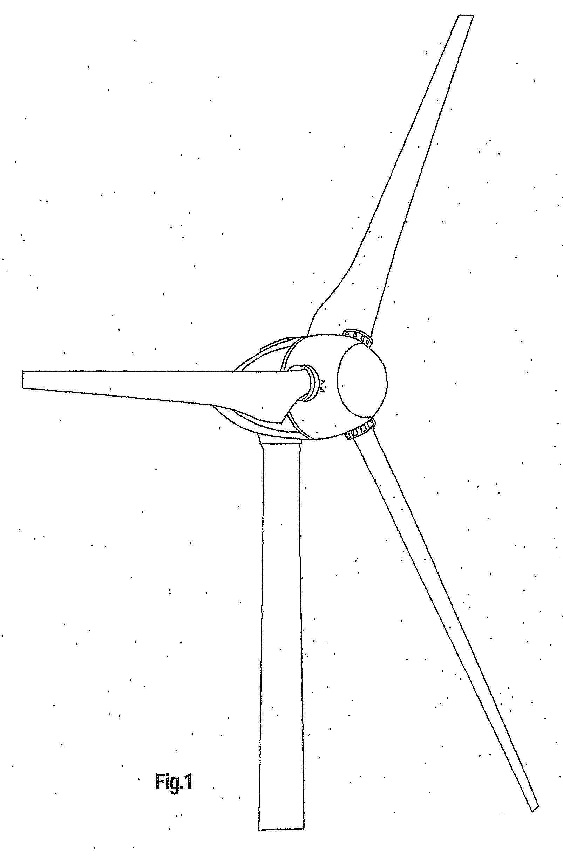

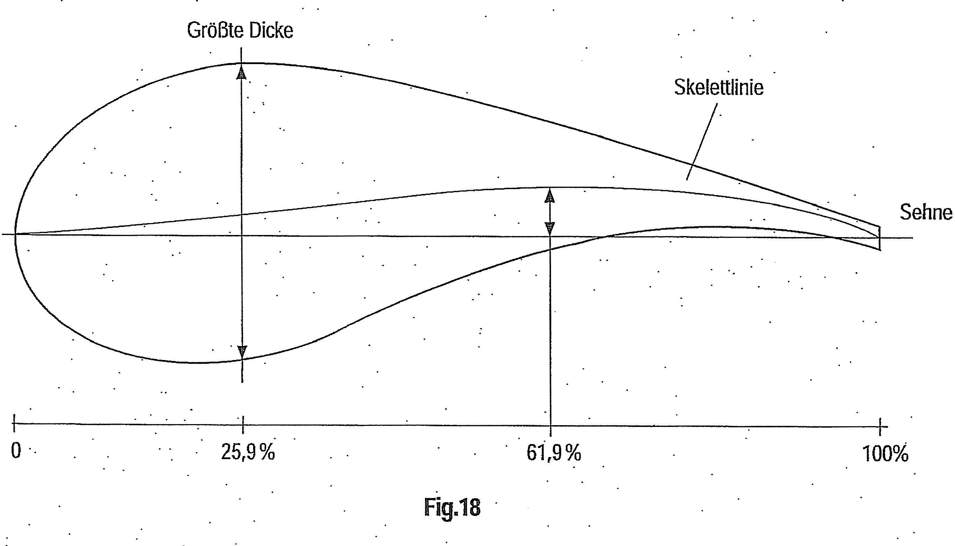

Besonders charakteristisch für das Profil des erfindungsgemäßen Rotorblatts ist, dass die größte Profildicke etwa 25 % bis 40 %, bevorzugt 32 % bis 36 % der Länge der Rotorblattsehne ausmacht. In der Fig. 18 beträgt die größte Profildicke etwa 34,6 % der Länge der Rotorblattsehne. In der Fig. 1 ist eine Sehne 1 eingetragen, die von der Mitte 2 der Rotorblatthinterkante 3 bis zum vordersten Punkt 4 der Rotorblattnase 5 verläuft. Die Dickenrücklage, also der Ort bezogen auf die Blattlänge, wo die größte Profildicke ausgebildet ist, beträgt etwa 20 % bis 30 % der Länge der Sehne, bevorzugt 23 % bis 28 %, im dargestellten Beispiel 25,9 %. Die größte Dicke wurde senkrecht zu der Sehne ermittelt und die Rücklage ist auf die Rotorblattnase bezogen.

Weiterhin ist in der Fig. 18 eine sog. Skelettlinie 7 eingetragen. Diese Skelettlinie ergibt sich aus der jeweiligen halben Dicke des Rotorblattes 8 an einem Punkt. Entsprechend verläuft diese Skelettlinie nicht geradlinig, sondern immer exakt zwischen gegenüberliegenden Punkten auf der Druckseite 9 des Rotorblattes 7 und der Saugseite 10 des Rotorblattes 7. Die Skelettlinie schneidet die Sehne an der Rotorblatthinterkante und der Rotorblattnase.

Die Wölbungsrücklage beim Querschnitt eines erfindungsgemäßen Rotorblatts beträgt etwa 55 % bis 70 % der Länge der Sehne, bevorzugt etwa 59 % bis 63 %. Im dargestellten Beispiel beträgt die Wölbungsrücklage etwas 61,9 % der Länge der Sehne. Die größte Wölbung beträgt hierbei etwa 4 % bis 8 % der Länge der Sehne, bevorzugt etwa 5 % bis 7 % der Länge der Sehne. Im dargestellten Beispiel beträgt die Wölbung etwa 5,87 % der Länge der Sehne.

Besonders augenfällig ist für das Profil des erfindungsgemäßen Rotorblatts weiterhin, dass die Druckseite des Rotorblatts zweimal die Sehne "schneidet", in diesem Bereich also die Druckseite des Profils konkav ausgebildet ist, während im vorderen Profilbereich, die Druckseite konvex ausgebildet ist. In dem Bereich, wo die Druckseite konkav ausgebildet ist, ist im entsprechenden, gegenüberliegenden Bereich auf der Saugseite diese fast geradlinig begrenzt.

Es mag durchaus bekannt gewesen sein, die Druckseite mit einer konkaven Krümmung auszubilden oder die Saugseite mit einer geradlinigen Begrenzung zu versehen. Besonders die Kombination beider Maßnahmen ist aber für das Profil eines erfindungsgemäßen Rotorblatts von großer Bedeutung und charakteristisch für das erfindungsgemäße Rotorblattprofil.

Auch die Rotorblatthinterkante des dargestellten Profils ist auffallend dick. Dies ist jedoch bezüglich der Ausbildung von Schall an der Rotorblatthinterkante nicht problematisch, weil das dargestellte Profil sich im inneren Drittel des Rotorkreises befindet und dort die Bahngeschwindigkeit nicht sehr hoch ist.

Die x-y-Koordinaten des in der Fig. dargestellten Profils sind in Tabelle 1 wiedergegeben und damit wird das Profil des erfindungsgemäßen Rotorblatts exakt beschrieben.

Zur Verbesserung der aerodynamischen Form des Rotorblatts ist dieses in dem Bereich der Rotorblattwurzel so ausgebildet, dass es dort seine größte Breite aufweist und somit das Rotorblatt eine der aerodynamischen Optimalform mehr oder weniger angenäherte Trapezform (in der Aufsicht) aufweist. Bevorzugt ist das Rotorblatt im Bereich der Rotorblattwurzel so ausgebildet, dass die der Gondel einer Windenergieanlage zugewandte Kante der Rotorblattwurzel der äußeren Kontur der Gondel in wenigstens einer Winkelstellung angepasst ist, z. B. derart angepasst ist, dass zwischen der Gondel und der der Windenergieanlage zugewandten Kante der Rotorblattwurzel und der äußeren Kontur der Gondel bei Stellung des Rotorblatts in Nenn-Windstellung ein sehr geringer Abstand, z. B. einen Abstand von etwa 5 mm bis 100 mm besteht.

Bei einem Rotorblatt mit den vorgenannten Eigenschaften hat sich eine signifikant höhere Leistungssteigerung, z. T. bis zu 10 % ergeben. Durch diese nicht vorhersagbare Leistungssteigerung erreicht eine erfindungsgemäße Windenergieanlage bei einer gegebenen Windgeschwindigkeit unterhalb der Nennwindgeschwindigkeit eine höhere Leistung. Außerdem erreicht sie früher als bisher ihre Nennleistung. Entsprechend können die Rotorblätter auch früher gedreht (gepitcht) werden und damit sinkt die Schallemission einerseits und die mechanische Belastung der Anlage andererseits.

Dabei liegt der Erfindung die Erkenntnis zugrunde, dass die heute gängige Rotorblattform im Windkanal zwar bei unterschiedlichen Windgeschwindigkeiten, aber stets gleichförmiger Luftströmung untersucht wird. Da der Wind in der Natur aber in den seltensten Fällen in der Fläche gleichförmig weht, sondern einer stochastischen Gesetzmäßigkeit unterliegt, kommt es bei den bekannten Rotorblättern in Folge von Böen zur Ablösung der Strömung gerade im Blattinnenbereich nahe der Rotornabe, wo das Blatt eben nicht mehr aerodynamisch sauber und optimal ausgebildet ist. Diese Strömungsablösung setzt sich in Richtung des Rotorblattaußenbereichs (Rotorblatttip) ein Stück entlang des Rotorblattes fort. Dadurch kann sich die Strömung vom Rotorblatt in einem blasenförmigen Bereich vom Rotorblatt lösen und so zu entsprechenden Leistungseinbußen führen. Bei der Erfindung und bei Betrachtung der vorbeschriebenen Ausgangssituation kann also durch ein sauber ausgebildetes Rotorblatt auch im Rotorblattinnenbereich eine erhebliche Leistungssteigerung erzielt werden.

Würde man nunmehr ein bekanntes Standardprofil anstelle des in der vorliegenden Anmeldung vorgeschlagenen, empirisch ermittelten Profils verwenden, wäre für eine aerodynamisch saubere Ausbildung des Rotorblatts etwa die doppelte Profiltiefe (dies entspricht der Länge der Sehne des Rotorblattes) im unteren Rotorblattbereich (nabennahen Bereich) erforderlich. Die hohe Profildicke im vorderen Bereich ist aber für einen sichere Lastabtrag und zur Erreichung eines Auftriebswertes C_{A} größer als 2 erforderlich.

Wie aus dem Stand der Technik bekannt ist, werden heutzutage regelmäßig Rotorblätter gebaut, die im Innenbereich möglichst eine große Materialeinsparung aufweisen. Typische Beispiele hierfür zeigt der bereits erwähnte Stand der Technik nach "Windkraftanlagen", Erich Hau, 1996, auf den Seiten 114 und 115. Dort ist zu sehen, dass die größte Profiltiefe stets in einem gewissen Abstand vom Rotorblattanschluss erreicht wird, also im rotorblattanschlussnahen Bereich, wobei bei diesen Rotorblättern gemäß dem Stand der Technik Material einspart wird. Wird aber in der Aufsicht eine der Trapezform angenäherte Optimalform verwendet, so ist die größte Breite eines Rotorblattes nicht etwa in einem Abstand zum Rotorblattanschluss, sondern genau im Bereich des Rotorblattanschlusses selbst ausgebildet. Im Innenbereich der Rotorblätter wird dann also nicht möglichst viel Material einspart.

Die Ursache für die bislang vorgenommene Materialeinsparung liegt in der statischen Betrachtungsweise der Strömungsverhältnisse (wie vorbeschrieben) bei der Berechnung/Entwicklung der Rotorblätter. Hinzu kommt, dass gängige Berechnungsprogramme für Rotorblätter das Rotorblatt in einzelne Abstände aufteilen und jeden Blattabschnitt für sich berechnen, um daraus die Bewertung für das gesamte Rotorblatt abzuleiten.

Die Realität sieht allerdings anders aus. Einerseits bläst der Wind nicht gleichmäßig und statisch innerhalb eines bestimmten Flächenbereichs, sondern zeigt deutlich ein stochastisches Verhalten, andererseits ist aufgrund der geringen Umfangsgeschwindigkeit des Rotorblattes im Innenbereich (also im rotornabennahen Bereich) der Einfluss der Windgeschwindigkeit beträchtlich und damit ändert sich der Anstellwinkel in diesem Bereich mit einer hohen Abhängigkeit von der momentan Windgeschwindigkeit. In Folge dessen kommt es entsprechend häufig zum Ablösen der Strömung vom Rotorblatt auch im Innenbereich des Rotorblatts.

In einem solchen Fall ist eine Hysterese wirksam. Die Strömung legt sich bei erneutem Auftreten der vorherigen Windgeschwindigkeit, z. B. nachdem eine Böe vorüber ist, nicht wieder gleich an das Rotorblatt an. Vielmehr muss die Windgeschwindigkeit zunächst weiter absinken (der Anstellwinkel muss sich also weiter verändern), bis die Strömung sich wieder an die Rotorblattoberfläche anlegt. Sinkt die Windgeschwindigkeit aber nicht weiter ab, so kann es durchaus sein, dass für einen längeren Zeitraum trotz anströmenden Windes eine relevante Kraft auf das Rotorblatt ausgeübt wird, weil sich die Strömung noch nicht wieder an die Rotorblattoberfläche angelegt hat.

Durch die erfindungsgemäße Ausführung des Rotorblattes wird die Gefahr der Strömungsablösung deutlich verringert. Diese Ablösegefahr wird ebenfalls durch das relativ dicke Profil verringert. Die beträchtliche Leistungssteigerung lässt sich auch dadurch gut erklären, dass durch die Hysterese-Wirkung bei einmal aufgetretener Ablösung der Strömung die Leistungseinbußen über einem beträchtlichen Zeitraum (für Rotorblätter gemäß dem Stand der Technik) aufrechterhalten bleibt.

Ein weiterer Teil der Leistungssteigerung lässt sich dadurch erklären, dass auch der Wind den Weg des geringsten Widerstandes nutzt. Wenn also das Rotorblatt im nabennahen Innenbereich sehr dünn (große Materialeinsparung) ist, kommt dies einem "Schlupfloch" in der Erntefläche des Rotorkreises gleich, durch welches die Luft bevorzugt strömt. Auch hier ist durchaus eine Schwäche der gängigen Berechnungsprogramme erkennbar, die stets von einer gleichförmigen Verteilung über die Rotorkreisfläche ausgehen.

"Verschließt" man nun dieses "Schlupfloch" durch die trapezförmige Ausbildung des Rotorblatts im nabennahen Bereich, wird sich eine bessere Verteilung der Luftströmung über die gesamte Kreisfläche einstellen und somit wird auch die Wirkung auf den äußeren Bereich des Rotorblatts noch etwas erhöht. Entsprechend leistet daher das "Verschließen" dieses "Schlupfloches" einen Beitrag zur höheren Leistungsausbeute des erfindungsgemäßen Rotorblattes.

Hier liegt ein weiterer Schwachpunkt der gängigen Berechnungsprogramme, denn diese betrachten auch den unmittelbar an das "Schlupfloch" angrenzenden Rotorblattabschnitt als vollwertigen Rotorblattabschnitt, der wegen der besonderen Strömungsverhältnisse (häufige Strömungsabrisse und ein späteres Wiedereinstellen der vorgesehenen Strömungsverhältnisse) nicht sein kann.

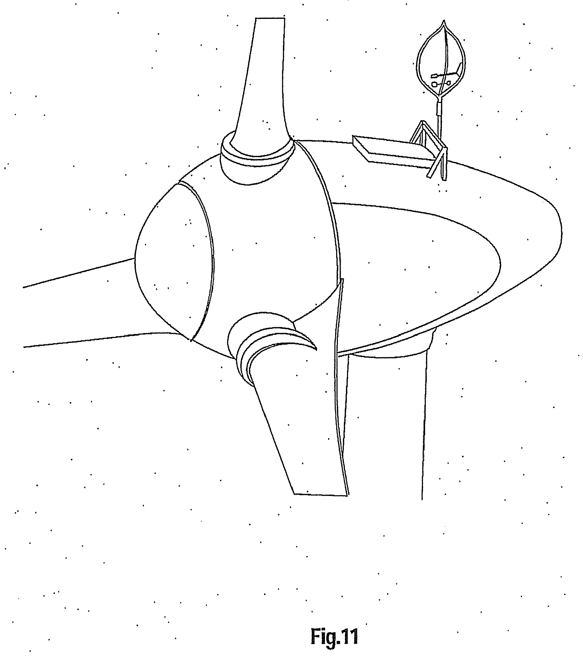

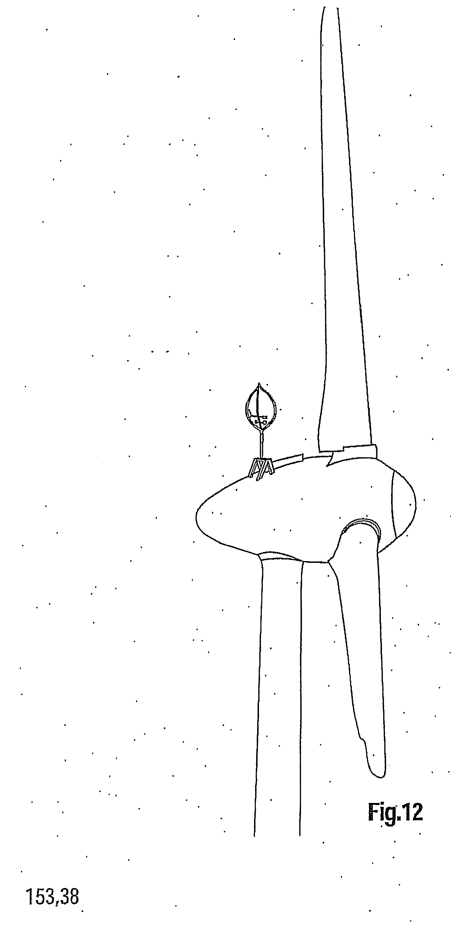

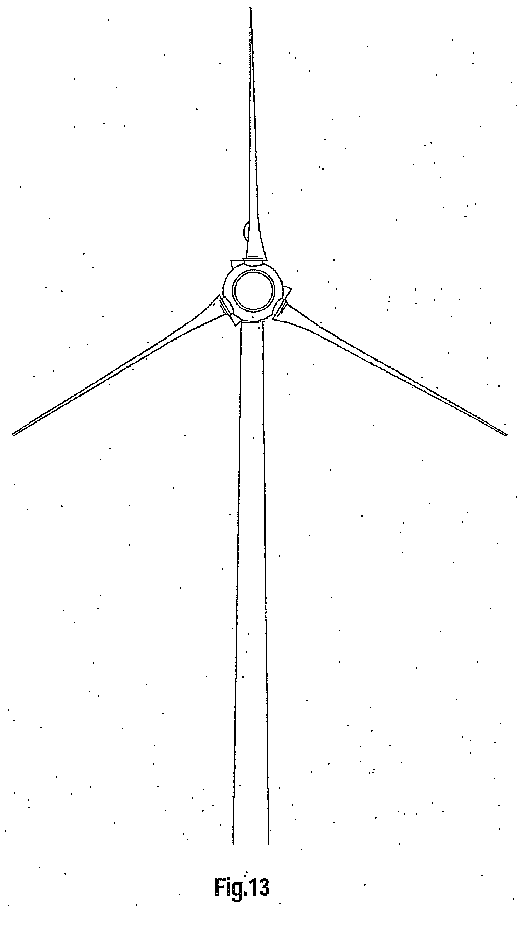

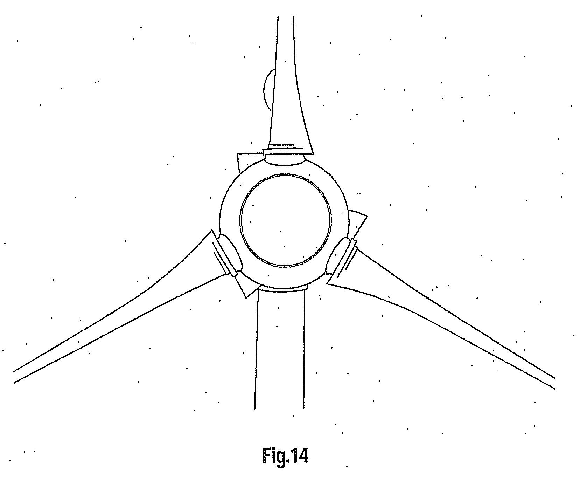

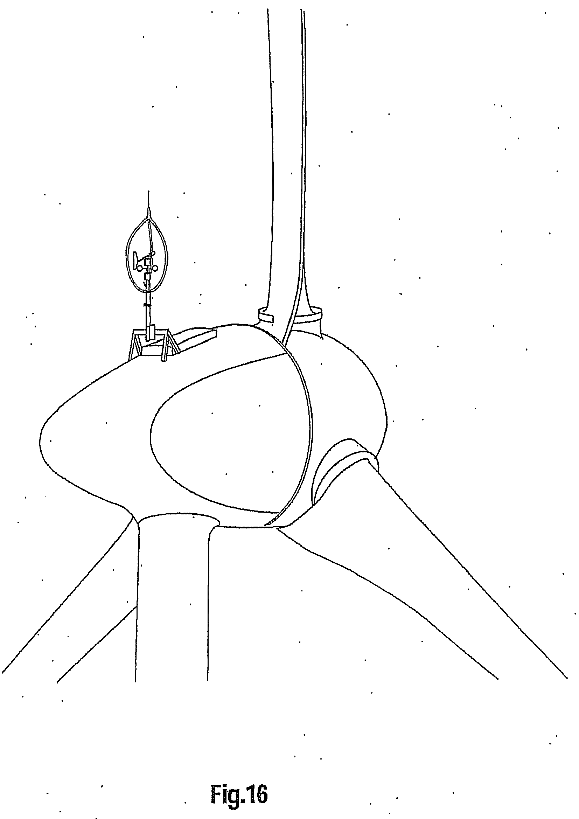

Fig. 11 bis 17 zeigen die Ansicht einer erfindungsgemäßen Windenergieanlage von vorne oder von der Seite. Hierbei ist zu erkennen, wie die drei Rotorblätter im nabennahen Bereich fast nahtlos in die äußere Gestaltung der Gondel übergehen. Dies gilt jedoch nur für die Stellung der Rotorblätter, soweit diese sich in Nenn-Windstellung befinden.

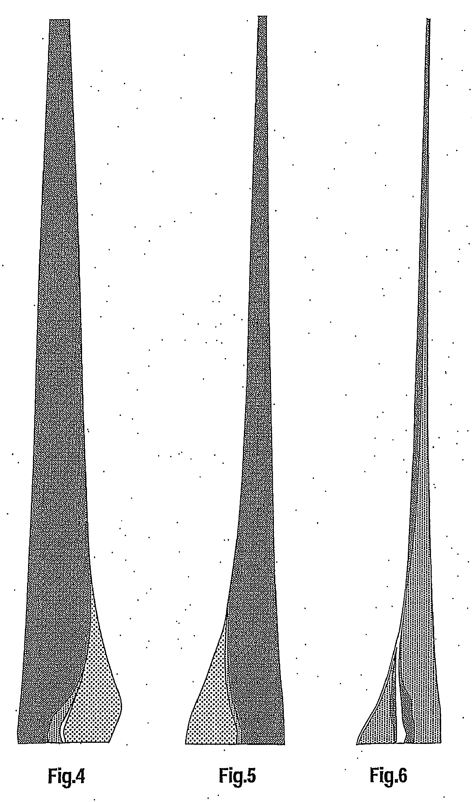

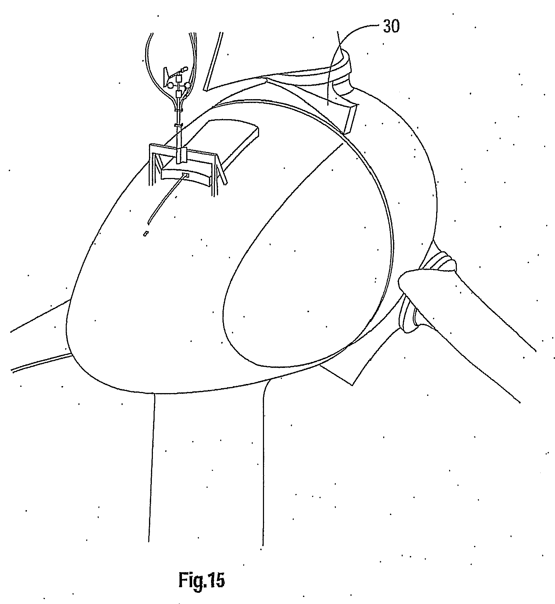

Wenn der Wind dann weiter über Nennwind ansteigt, werden wie üblich die Rotorblätter durch Pitchen (Pitchregelung) langsam aus dem Wind herausgenommen und Fig. 15 zeigt, dass dann durchaus ein größerer Abstand zwischen der unteren Kante des Rotorblattes im Innenbereich und der Gondel gegeben ist. Fig. 4 zeigt aber auch, dass auf der Außenseite der Gondel eine Struktur ausgebildet ist, die in ihrem Querschnitt dem Profil des Rotorblatts im nabenahen Bereich weitestgehend entspricht und bei Stellung des Rotorblatts in einem Anstellwinkel bei Nenngeschwindigkeit direkt unterhalb des Rotorblatts liegt, so dass nur ein kleiner Spalt zwischen der Struktur und dem Rotorblatt im nabennahen Bereich ausgebildet ist.

Mithin enthält auch die äußere Kontur der Gondel einen Teil des Rotorblatts, welches nicht integraler Bestandteil des Rotorblatts ist.

Bei dem in Fig. 18 dargestellten Rotorblattprofil beträgt der Nasenradius etwa 0,146 der Profiltiefe.

Wie in Fig. 18 zu erkennen, ist an der Saugseite ein längerer, nahezu geradliniger Bereich ausgebildet. Dieser lässt sich beispielsweise wie folgt beschreiben: Im Bereich 38 % bis 100 % der Profiltiefe beträgt der Radius 1,19 x der Länge der Profiltiefe. Im Bereich von 40 % bis 85 % der Profiltiefe (siehe Fig. 18) beträgt der Radius etwa 2,44 multipliziert mit der Profiltiefe. Im Bereich von 42 % bis 45 % der Profiltiefe beträgt der Radius etwa 5,56 der Profiltiefe.

Im Bereich von 36 % bis 100 % der Profiltiefe beträgt die maximale Abweichung von der idealen Geraden etwa 0,012 der Profillänge. Dieser Wert ist der maßgebende Wert, da der Krümmungsradius variiert und der größte Krümmungsradius bereits in den jeweiligen Bereichen angegeben wird.

Bei dem dargestellten Beispiel beträgt die Länge der Saugseite etwa 1,124 der Länge der Profiltiefe, die Länge der Druckseite beträgt 1,112 der Länge der Profiltiefe. Dies bedeutet, dass die Saugseite nur unwesentlich länger ist als die Druckseite. Es ist daher sehr vorteilhaft, wenn das Verhältnis der Saugseitenlänge zur Druckseitenlänge kleiner ist als 1,2, bevorzugt kleiner als 1,1 bzw. in einem Wertebereich zwischen 1 und 1,03 liegt.

Aus den dargestellten Fig. ist zu erkennen, dass das Rotorblatt seine größte Profiltiefe direkt am Spinner, also an der Außenseite der Gondel der Windenergieanlage aufweist. So kann beispielsweise bei einer Windenergieanlage mit einem Rotordurchmesser von 30 m die Profiltiefe am Spinner etwa 1,8 bis 1,9, bevorzugt 1,84 m betragen. Wenn der Spinner dann etwa einen Durchmesser von 3,2 m aufweist, so beträgt das Verhältnis der Profiltiefe des Rotorblatts am Spinner zum Spinnerdurchmesser etwa 0,575. Es ist daher sehr vorteilhaft, wenn das Verhältnis der Profiltiefe zum Spinnerdurchmesser größer ist als ein Wert von 0,4 bzw. in einem Wertebereich zwischen 0,5 und 1 liegt. Dabei kann jeder Wert aus dem vorgenanntem Wertebereich angenommen werden. In dem vorgenannten Beispiel beträgt das Verhältnis der Profiltiefe zum Rotordurchmesser etwa 0,061. Es liegt auf der Hand, dass daher das "Schlupfloch" möglichst gering ausfällt, wenn das Verhältnis der Profiltiefe zum Rotordurchmesser größer ist als ein Wert von 0,05 bis 0,01, wobei der beispielhafte Wert sich als äußerst günstig herausgestellt hat, was die Leistungsfähigkeit des Rotorblatts angeht.

Ein anderes Beispiel sei ein Rotorblatt mit dem Fig. 18 dargestellten Profilquerschnitt im ersten Drittel, wobei die Profiltiefe am Spinner etwa 4,35 m beträgt, der Spinnerdurchmesser 5,4 m beträgt und der Rotordurchmesser insgesamt 71 m beträgt. Dann liegt der Wert der Profiltiefe zum Spinnerdurchmesser bei 0,806 und das Verhältnis der Profiltiefe zum Rotordurchmesser wiederum bei 0,061. Die vorgenannten Werte beziehen sich auf einen Dreiblattrotor mit Pitchregelung.

Wie beschrieben, kann beim erfindungsgemäßen Rotorblatt die breiteste Stelle (die Stelle mit der größten Profiltiefe) des Rotorblatts direkt im Bereich des Blattanschlusses ausgebildet sein. Der Blattanschluss ist der Bereich, in dem das Rotorblatt an die Nabe der Windenergieanlage angeschlossen (verbunden, verschraubt usw.) wird. Darüber hinaus ist die untere Kante des Rotorblatts, also die Kante, die der Gondel der Windenergieanlage zugewandt ist, der äußeren Kontur der Gondel in Längsrichtung weitestgehend nachgeführt bzw. angepasst. Somit liegt hier ein Rotorblatt, wenn es sich in Fahnenstellung befindet (praktisch keine dem Wind ausgerichtete Fläche mehr), parallel zur unteren, der Gondel zugewandten Kante und der Abstand zwischen der unteren Kante und der äußeren Kontur der Gondel ist minimal, vorzugsweise weniger als 50 cm oder noch besser weniger als 20 cm.

Wird nun dieses Rotorblatt in den Wind gestellt, so hat es eine maximal große Fläche auch im sehr nahen Bereich des Rotorblatts (das Schlupfloch ist sehr gering). Die vorgenannte Entgegenhaltung Erich Hau zeigt, dass das Rotorblatt beim Stand der Technik im nabennahen Bereich regelmäßig abnimmt (die Rotorblätter sind dort weniger breit als an ihrer breitesten Stelle) und umgekehrt ist bei dem erfindungsgemäßen Rotorblatt die breiteste Stelle gerade im nabennahen Bereich, so dass auch das Windpotential dort größtmöglich abgeschöpft werden kann.

Bekanntlich ergeben gerade bei sehr großen Rotorblättern im nabennahen Bereich eine sehr große Rotorblattbreite. Damit auch ein Transport solcher Rotorblätter noch möglich ist (die Breite des Rotorblatts im nabennahen Bereich kann bei großen Rotorblättern, also Rotorblätter die länger sind als 30 m, durchaus 5 m bis 8 m betragen), kann das Rotorblatt zweiteilig ausgebildet sein, wobei während des Transports beide Teile getrennt sind und nach dem Transport zusammengesetzt werden können. Hierzu werden beide Teile von Installation an der Windenergieanlage miteinander verbunden, beispielsweise über Schraubverbindungen und unlösbare Verbindungen (Kleben). Dies ist insbesondere bei großen Rotorblättern kein Problem, da die Rotorblätter aufgrund ihrer Größe auch von innen her für das Zusammensetzen zugänglich sind, so dass nach außen hin ein einheitliches Rotorblatt erscheint und Trennlinien an den zusammengesetzten Teilen kaum oder gar nicht sichtbar sind.

Mit dem erfindungsgemäßen Rotorblattdesign kann - wie erste Messungen zeigen - der Wirkungsgrad gegenüber bisherigen Rotorblättern deutlich gesteigert werden.

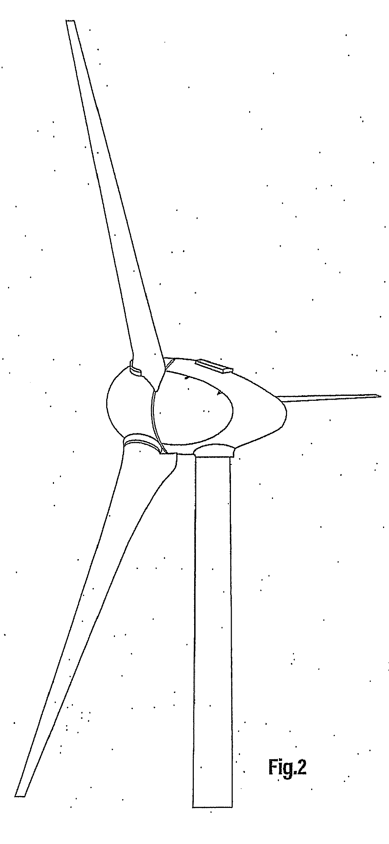

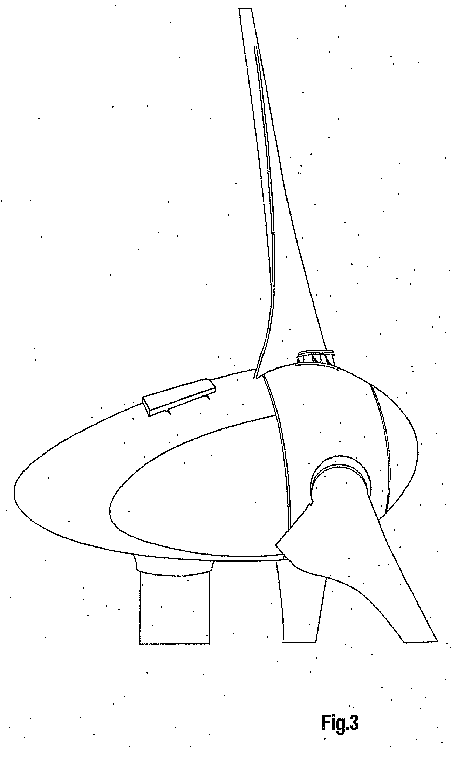

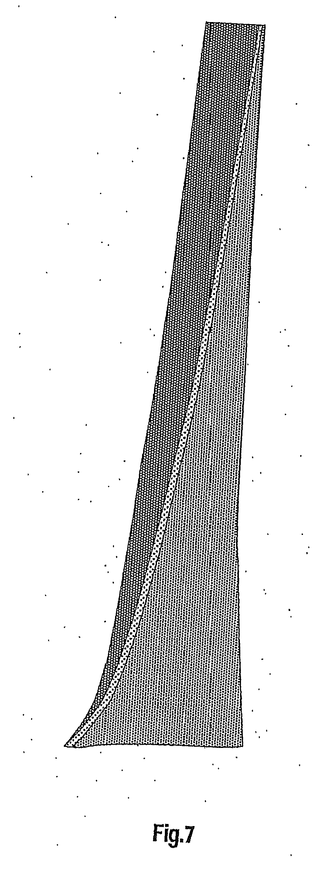

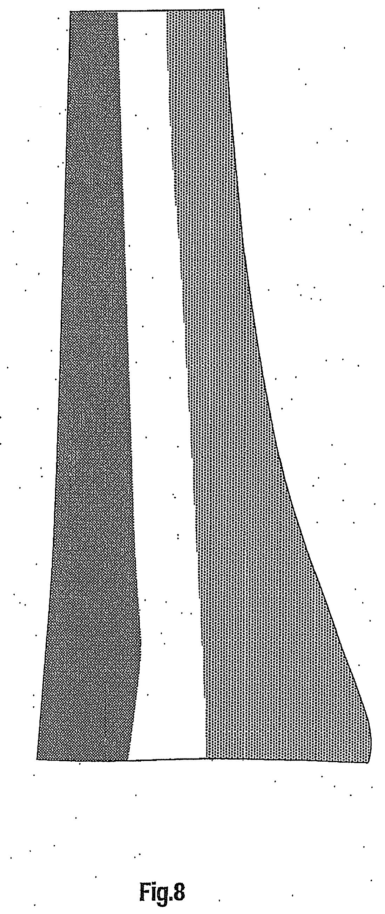

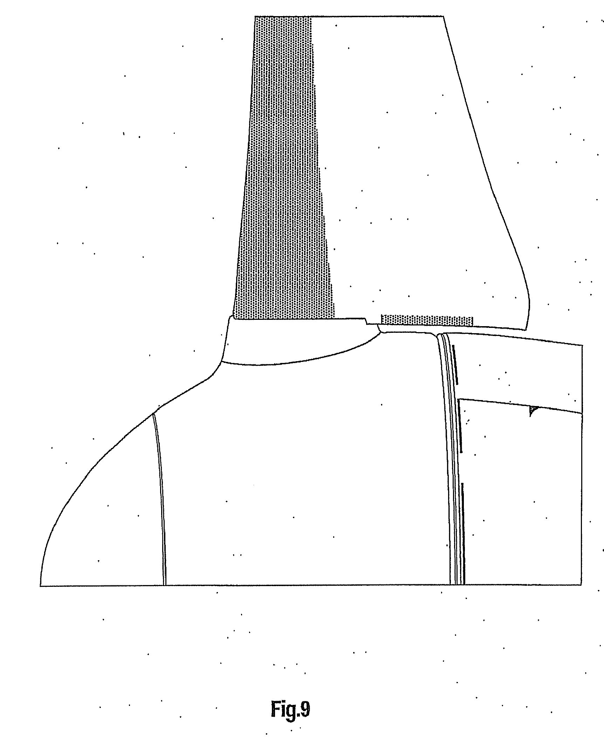

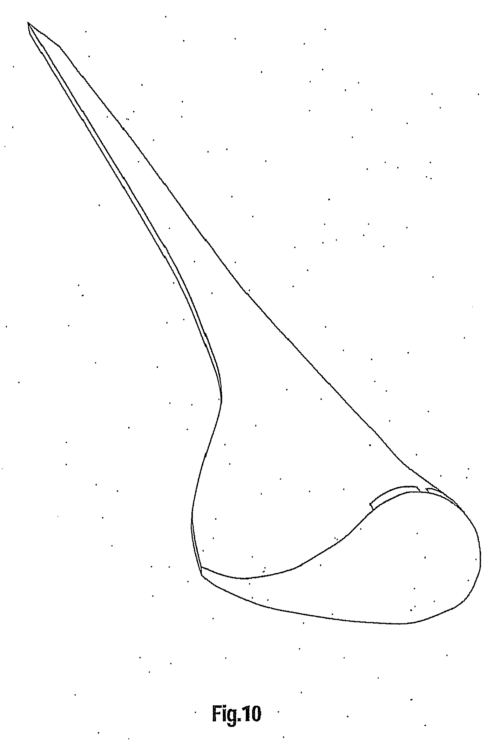

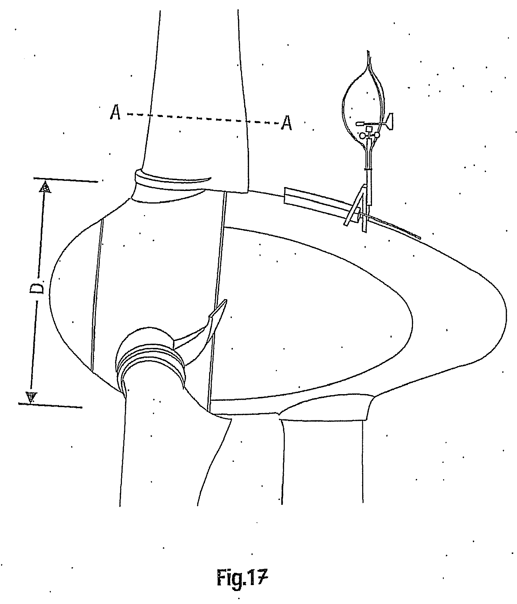

Wie aus den Fig. 1 bis 17 ersichtlich, sind bei einer erfindungsgemäßen Windenergieanlage 1 die Rotorblätter so ausgebildet, dass sie ihre größte Profiltiefe im nabennahen Bereich aufweisen und darüber hinaus sind die Rotorblätter entlang ihres gesamten Profils im nabennahen Bereich sehr nahe an die Gondelverkleidung (Spinner) des Maschinenhauses der Windenergieanlage herangerückt. Damit ergibt sich zumindest für die Stellung, bei welcher das Rotorblatt einen Winkel einnimmt, welcher bei Windgeschwindigkeiten bis zum Nennwindbereich angenommen wird, ein sehr geringer Abstand zur Gondelverkleidung. Während bei der Darstellung wie beispielsweise nach Fig. 1, 2 und 3 die Rotorblätter sehr nahe an die Außenverkleidung der Gondel auch mit ihrem hinteren Profilteil herangerückt sind, ist bei einer alternativen Ausführung, wie sie beispielsweise in Fig. 11 bis 17 dargestellt ist, die Außenverkleidung der Gondel mit einem Rotorblattteil 30 selbst versehen, welches jedoch selbst nicht integraler Bestandteil des gesamten Rotorblatt ist. So ist insbesondere in den Fig. 15 und 17 gut zu erkennen, dass das auf der Gondelaußenseite ausgebildete Rotorblattteil dort feststeht und in einem Winkel angeordnet ist, welcher der Winkelstellung eines Rotorblattes bis zur Nennwindgeschwindigkeit entspricht, so dass zumindest bei Windgeschwindigkeiten bis zum Nennwind ein minimaler Spalt zwischen der unteren Kante des Rotorblatts auch im hinteren Profiltiefenbereich und der Gondel besteht.

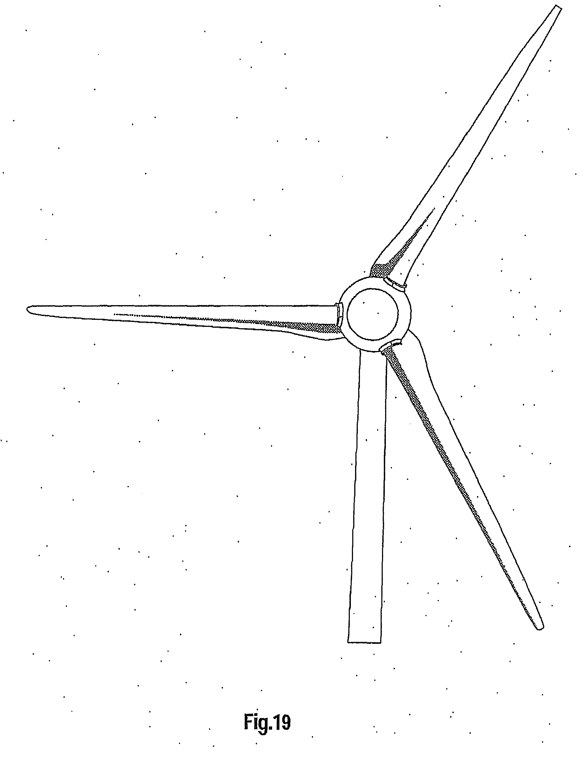

Auch in Fig. 19 ist gut zu erkennen, dass durch die erfindungsgemäße Ausführung der Rotorblätter im Rotorzentrum nur ein ganz geringes "Schlupfloch" für den Wind besteht.

Fig. 18 zeigt den Querschnitt eines erfindungsgemäßen Rotorblatts gemäß der Linie A - A in Fig. 17, also das Profil des Rotorblatts im nabennahen Bereich.

Fig. 17 enthält auch eine Angabe, was unter dem Durchmesser D des Spinners zu verstehen ist.

Der Rotordurchmesser wird durch den Durchmesser des Kreisfläche beschrieben, die vom Rotor bei Drehung überstrichen wird.

Wie in Fig. 15 und anderen Fig. zu erkennen, ist das Teil 30 des Rotorblatts, welches nicht integraler Bestandteil des drehbaren Rotorblatts ist, integraler Bestandteil der Außenverkleidung der Gondel. Das jeweilige Teil kann an der Gondel angeschraubt sein oder auch mit der Gondel einstückig verbunden oder verklebt sein.

Nachfolgend eine Liste weiterer Ausführungsformen der Erfindung
Ausführungsform 1 Rotorblatt einer Windenergieanlage, wobei das Rotorblatt eine Dickenrücklage etwa im Bereich von 15 % bis 40 %, bevorzugt im Bereich von etwa 23 % bis 28 % aufweist und wobei die größte Profildicke etwa 20 % bis 45 %, bevorzugt etwa 32 % bis 36 % beträgt.
Ausführungsform 2 Rotorblatt nach Ausführungsform 1,
   **dadurch gekennzeichnet, dass** der Querschnitt des Rotorblattes durch eine Skelettlinie beschrieben ist, deren größte Wölbung in einem Bereich von 50° bis 70°, bevorzugt etwa im Bereich von 60° bis 65° liegt.
Ausführungsform 3 Rotorblatt nach Ausführungsform 2,
   **dadurch gekennzeichnet, dass** die größte Wölbung etwa 3 % bis 10 %, bevorzugt etwa 4 % bis 7 %, bemisst.
Ausführungsform 4 Rotorblatt nach einer der vorhergehenden Ausführungsformen, **dadurch gekennzeichnet, dass** dieser Querschnitt bevorzugt im unteren Drittel des Rotorblatts, der sich dem Rotorblattanschluss anschließt, ausgebildet ist.
Ausführungsform 5 Rotorblatt nach einer der vorhergehenden Ausführungsformen, **dadurch gekennzeichnet, dass** das Rotorblatt eine Druckseite und eine Saugseite aufweist, wobei die Druckseite ein Teil mit einer konkaven Krümmung aufweist und dass auf der Saugseite ein nahezu geradliniger Abschnitt ausgebildet ist.
Ausführungsform 6 Windenergieanlage mit wenigstens einem Rotorblatt, das an einer Rotornabe angebracht ist, sowie einer Nabenverkleidung,
   **dadurch gekennzeichnet, dass** auf der Außenseite der Nabenverkleidung ein Teil eines Rotorblatts ausgebildet ist, der mit der Nabenverkleidung fest verbunden ist, nicht aber integraler Bestandteil des Rotorblatts der Windenergieanlage ist.
Ausführungsform 7 Windenergieanlage nach Ausführungsform 6,
   **dadurch gekennzeichnet, dass** das Profil des Rotorblattteils, welches an der Nabenverkleidung ausgebildet ist, im Wesentlichen dem Profil des Rotorblatts im nabennahen Bereich entspricht.
Ausführungsform 8 Windenergieanlage nach Ausführungsform 7, **dadurch gekennzeichnet, dass** der Teil des Rotorblatts, welcher auf der Nabenverkleidung ausgebildet ist, feststeht und im Wesentlichen so ausgerichtet ist, dass er bei Stellung des Rotorblatts bei Nennwindgeschwindigkeit unterhalb der Nennwindgeschwindigkeit direkt unterhalb des nabennahen Bereichs des Rotorblatts der Windenergieanlage liegt.
Ausführungsform 9 Windenergieanlage mit wenigstens einem Rotorblatt nach einer der vorhergehenden Ausführungsformen.
Ausführungsform 10 Windenergieanlage, insbesondere nach Ausführungsform 9, wobei die Windenergieanlage einen Rotor aufweist, der wenigstens ein Rotorblatt aufnimmt, welches im Bereich der Rotorblattnabe seine größte Profiltiefe aufweist, wobei das Verhältnis von Profiltiefe zum Rotordurchmesser den Wert annimmt, welcher im Bereich von etwa 0,04 bis 0,1 liegt, bevorzugt etwa einen Wert von 0,055 bis 0,7, z. B. 0,061 aufweist.
Ausführungsform 11 Windenergieanlage, insbesondere nach Ausführungsform 9 oder 10, mit einem Maschinenhaus, welches einen Generator und einen mit dem Generator verbundenen Rotor aufnimmt, wobei der Rotor wenigstens zwei Rotorblätter enthält, wobei der Rotor eine Nabe aufweist, die mit einer Verkleidung (Spinner) versehen ist, wobei das Verhältnis der Profiltiefe eines Rotorblatts zum Durchmesser des Spinners einen Wert aufweist, welcher größer ist als 0,4, bevorzugt in einem Wertbereich zwischen 0,5 und 1 liegt.
Ausführungsform 12 Windenergieanlage, insbesondere nach einer der vorhergehenden Ausführungsformen, mit einem Rotor, welcher bevorzugt mehr als ein Rotorblatt aufweist, wobei das Rotorblatt eine der aerodynamischen Optimalform mehr oder weniger angenäherte Trapezform aufweist und das Rotorblatt im Bereich der Rotorblattwurzel seine größte Breite aufweist und die der Gondel der Windenergieanlage zugewandte Kante der Rotorblattwurzel so ausgebildet ist, dass der Verlauf der Kante im Wesentlichen der äußeren Kontur der Gondel (in Längsrichtung) angepasst ist.
Ausführungsform 13 Windenergieanlage nach Ausführungsform 12,
   **dadurch gekennzeichnet, dass** die untere, der Gondel zugewandte Kante des Rotorblatts im Wurzelbereich bei Verdrehung des Rotorblatts in Fahnenstellung nahezu parallel zur äußeren Kontur der Gondel liegt.
Ausführungsform 14 Windenergieanlage nach Ausführungsform 13, **dadurch gekennzeichnet, dass** der Abstand der der unteren Gondel zugewandten Kante des Rotorblatts und der äußeren Kontur der Gondel in Fahnenstellung weniger als 50 cm, vorzugsweise weniger als 20 cm beträgt.
Ausführungsform 15 Windenergieanlage nach einer der vorhergehenden Ausführungsformen,
   **dadurch gekennzeichnet, dass** das Rotorblatt im Wurzelbereich aus der Hauptblattebene gekippt ist.
Ausführungsform 16 Windenergieanlage nach einer der vorhergehenden Ausführungsformen,
   **dadurch gekennzeichnet, dass** das Rotorblatt im Wurzelbereich zweiteilig ausgebildet ist, wobei eine in Längsrichtung des Rotorblatts gerichtete Trennlinie ausgebildet ist.
Ausführungsform 17 Windenergieanlage nach Ausführungsform 16,
   **dadurch gekennzeichnet, dass** beide Teile des Rotorblatts erst kurz vor Installation des Rotorblatts in der Windenergieanlage zusammengesetzt werden.
Ausführungsform 18 Windenergieanlage nach den Ausführungsformen 16 und 17, **dadurch gekennzeichnet, dass** die Teile des Rotorblatts während des Transports des Rotorblatts getrennt sind.
Ausführungsform 19 Windenergieanlage, insbesondere nach einer der vorhergehenden Ausführungsformen,
   **dadurch gekennzeichnet, dass** die Windenergieanlage wenigstens ein Rotorblatt aufweist, welches durch eine Saugseite und eine Druckseite gekennzeichnet ist, wobei das Verhältnis der Länge der Saugseite zur Länge der Druckseite kleiner ist als ein Wert von 1,2, bevorzugt kleiner ist als 1,1 und insbesondere in einem Wertebereich zwischen 1 und 1,03 liegt.

### x-y-kooroliuafrce

**Tabelle 1**

| x | y | x | y |
|---|---|---|---|
| 1.000000 | 0.013442 | 0.000197 | -0.007376 |
| 0.983794 | 0.020294 | 0.000703 | -0.013612 |
| 0.958357 | 0.030412 | 0.001550 | -0.019816 |
| 0.930883 | 0.040357 | 0.002704 | -0.025999 |
| 0.899462 | 0.050865 | 0.004080 | -0.032162 |
| 0.863452 | 0.062358 | 0.005649 | -0.038281 |
| 0.823890 | 0.074531 | 0.007477 | -0.044316 |
| 0.781816 | 0.006987 | 0.009639 | -0.050245 |
| 0.737837 | 0.099513 | 0.012124 | -0.056078 |
| 0.692331 | 0.111993 | 0.014883 | -0.061829 |
| 0.645363. | 0.124434 | 0.017905 | -0.061491 |
| 0.597614 | 0.136709 | 0.021204 | -0.073045 |
| 0.549483 | 0.148731 | 0.024779 | -0.078485 |
| 0.503007 | 0.160228 | 0.028618 | -0.083809 |
| 0.461036 | 0.170758 | 0.032721 | -0.089004 |
| 0.425769 | 0.179639 | 0.037087 | -0.094062 |
| 0.387598 | 0.186588 | 0.041711 | -0.098973 |
| 0.374996 | 0.191889 | 0.046594 | -0.103723 |
| 0.356186 | 0.195840 | 0.051740 | -0.108301 |
| 0.339750 | 0.198868 | 0.057150 | -0.112695 |
| 0.324740 | 0.200524 | 0.062824 | -0.116897 |
| 0.310542 | 0.201512 | 0.068769. | -0.120893 |
| 0.296731 | 0.201704 | 0.074991 | -0.124669 |
| 0.282999 | 0.201174 | 0.081500 | -0.128219 |
| 0.269154 | 0.200007 | 0.088310 | -0.131521 |
| 0.255115 | 0.198267 | 0.095450 | -0.134551 |
| 0.240876 | 0.195985 | 0.102955 | -0.137294 |
| 0.226479 | 0.193185 | 0.110872 | -0.139735 |
| 0.212006 | 0.189892 | 0.119262 | -0.141872 |
| 0.197571 | 0.186146 | 0.128192 | -0.143724 |
| 0.183315 | 0.181995 | 0.137734 | -0.145316 |
| 0.169384 | 0.177505 | 0.147962 | -0.146667 |
| 0.155924 | 0.172745 | 0.158934 | -0.147800 |
| 0.143051 | 0.167780 | 0.170663 | -0.148727 |
| 0.130850 | 0.162675 | 0.183106 | -0.149431 |
| 0.119369 | 0.157478 | 0.196155 | -0.149877 |
| 0.108625 | 0.152229 | 0.209657 | -0.150001 |
| 0.098610 | 0.146953 | 0.223475 | -0.149715 |
| 0.089297 | 0.141664 | 0.237539 | -0.148932 |
| 0.080653 | 0.136362 | 0.251855 | -0.147579 |
| 0.072636 | 0.131036 | 0.266497 | -0.145597 |
| 0.065201 | 0.125679 | 0.281578 | -0.142949 |
| 0.058312 | '0.120269 | 0.297206 | -0.139628 |
| 0.051931 | 0.114786 | 0.313400 | -0.135851 |
| 0.046015 | 0.109229 | 0.330088 | -0.131016 |
| 0.040531 | 0.103598 | 0.347173 | -0.125692 |
| 0.035457 | 0.097893 | 0.364627 | -0.119588 |
| 0.030772 | 0.092113 | 0.382602 | -0.112537 |
| 0.026461 | 0.086262 | 0.401480 | -0.104293 |
| 0.022520 | 0.080332 | 0.421912 | -0.094548 |
| 0.018937 | 0.074321 | 0.444568 | -0.083182 |
| 0.015688 | 0.068240 | 0.468376 | -0.071217 |
| 0.012771 | 0.062095 | 0.491608 | -0.060017 |
| 0.010196 | 0.055878 | 0.514034 | -0.049898 |
| 0.007926 | 0.049601 | 0.535806 | -0.040854 |
| 0.005911 | 0.043298 | 0.557225 | -0.032760 |
| 0.004164 | 0.036989 | 0.578580 | -0.025495 |
| 0.002755 | 0.030661 | 0.600131 | -0.018956 |
| 0.001709 | 0.024300 | 0.622095 | -0.013059 |
| 0.000953 | 0.017915 | 0.644620 | -0.007755 |
| 0.000415 | 0.011534 | 0.667811 | -0.003015 |
| 0.000088 | 0.005186 | 0.691690 | 0.001179 |
| 0.000000 | 0,000000 | 0.716104 | 0.004827 |
| | | 0.740707 | 0.007908 |
| | | 0.764985 | 0.010392 |
| | | 0.786448 | 0.012238 |
| | | 0.810817 | 0.013425 |
| | | 0.832004 | 0.013957 . |
| | | 0.852100 | 0.013834 |
| | | 0.671284 | 0.013058 |
| | | 0.889797 | 0.011606 |
| | | 0.907926 | 0.009441 |
| | | 0.925997 | 0.006502 |
| | | 0.944381 | 0.002701 |
| | | 0.963552 | -0.002134 |
| | | 0.964409 | -0.008335 |
| | | 1.000000 | -0.013442 |

## Patentansprüche

1. Windenergieanlage mit einem Maschinenhaus, welches einen Generator und einen mit dem Generator verbundenen Rotor aufnimmt, wobei der Rotor wenigstens zwei Rotorblätter enthält, wobei der Rotor eine Nabe aufweist, die mit einer Verkleidung (Spinner) versehen ist, wobei das Verhältnis der Profiltiefe eines Rotorblatts zum Durchmesser des Spinners einen Wert aufweist, welcher größer ist als 0,4, bevorzugt in einem Wertbereich zwischen 0,5 und 1 liegt.

2. Windenergieanlage nach Anspruch 1, mit einem Rotor, welcher bevorzugt mehr als ein Rotorblatt aufweist, wobei das Rotorblatt eine der aerodynamischen Optimalform mehr oder weniger angenäherte Trapezform aufweist und das Rotorblatt im Bereich der Rotorblattwurzel seine größte Breite aufweist und die der Gondel der Windenergieanlage zugewandte Kante der Rotorblattwurzel so ausgebildet ist, dass der Verlauf der Kante im Wesentlichen der äußeren Kontur der Gondel (in Längsrichtung) angepasst ist.

3. Windenergieanlage nach Anspruch 2,
**dadurch gekennzeichnet, dass** die untere, der Gondel zugewandte Kante des Rotorblatts im Wurzelbereich bei Verdrehung des Rotorblatts in Fahnenstellung nahezu parallel zur äußeren Kontur der Gondel liegt.

4. Windenergieanlage nach Anspruch 3,
**dadurch gekennzeichnet, dass** der Abstand der der unteren Gondel zugewandten Kante des Rotorblatts und der äußeren Kontur der Gondel in Fahnenstellung weniger als 50 cm, vorzugsweise weniger als 20 cm beträgt.

5. Windenergieanlage nach einem der vorhergehenden Ansprüche,
**dadurch gekennzeichnet, dass** das Rotorblatt im Wurzelbereich aus der Hauptblattebene gekippt ist.

6. Windenergieanlage nach einem der vorhergehenden Ansprüche,
**dadurch gekennzeichnet, dass** das Rotorblatt im Wurzelbereich zweiteilig ausgebildet ist, wobei eine in Längsrichtung des Rotorblatts gerichtete Trennlinie ausgebildet ist,
dass beide Teile des Rotorblatts erst kurz vor Installation des Rotorblatts in der Windenergieanlage zusammengesetzt werden und
dass die Teile des Rotorblatts während des Transports des Rotorblatts getrennt sind.

7. Windenergieanlage, insbesondere nach einem der vorhergehenden Ansprüche, **dadurch gekennzeichnet, dass** die Windenergieanlage wenigstens ein Rotorblatt aufweist, welches durch eine Saugseite und eine Druckseite **gekennzeichnet** ist, wobei das Verhältnis der Länge der Saugseite zur Länge der Druckseite kleiner ist als ein Wert von 1,2, bevorzugt kleiner ist als 1,1 und insbesondere in einem Wertebereich zwischen 1 und 1,03 liegt.

8. Windenergieanlage, insbesondere nach einem der vorhergehenden Ansprüche, wobei die Windenergieanlage einen Rotor aufweist, der wenigstens ein Rotorblatt aufnimmt, welches im Bereich der Rotorblattnabe seine größte Profiltiefe aufweist, wobei das Verhältnis von Profiltiefe zum Rotordurchmesser den Wert annimmt, welcher im Bereich von etwa 0,04 bis 0,1 liegt, bevorzugt etwa einen Wert von 0,055 bis 0,7, z. B. 0,061 aufweist.

9. Rotorblatt einer Windenergieanlage, wobei das Rotorblatt eine Dickenrücklage etwa im Bereich von 15 % bis 40 %, bevorzugt im Bereich von etwa 23 % bis 28 % aufweist und wobei die größte Profildicke etwa 20 % bis 45 %, bevorzugt etwa 32 % bis 36 % beträgt,
dass der Querschnitt des Rotorblattes durch eine Skelettlinie beschrieben ist, deren größte Wölbung in einem Bereich von 50° bis 70°, bevorzugt etwa im Bereich von 60° bis 65° liegt und
dass die größte Wölbung etwa 3 % bis 10 %, bevorzugt etwa 4 % bis 7 %, bemisst.

10. Rotorblatt nach Anspruch 9,
**dadurch gekennzeichnet, dass** dieser Querschnitt bevorzugt im unteren Drittel des Rotorblatts, der sich dem Rotorblattanschluss anschließt, ausgebildet ist.

11. Rotorblatt nach einem der vorgehenden Ansprüche,
**dadurch gekennzeichnet, dass** das Rotorblatt eine Druckseite und eine Saugseite aufweist, wobei die Druckseite ein Teil mit einer konkaven Krümmung aufweist und dass auf der Saugseite ein nahezu geradliniger Abschnitt ausgebildet ist.

12. Windenergieanlage mit wenigstens einem Rotorblatt, das an einer Rotornabe angebracht ist, sowie einer Nabenverkleidung,
**dadurch gekennzeichnet, dass** auf der Außenseite der Nabenverkleidung ein Teil eines Rotorblatts ausgebildet ist, der mit der Nabenverkleidung fest verbunden ist, nicht aber integraler Bestandteil des Rotorblatts des Windenergieanlage ist.

13. Windenergieanlage nach Anspruch 12,
**dadurch gekennzeichnet, dass** das Profil des Rotorblattteils, welches an der Nabenverkleidung ausgebildet ist, im Wesentlichen dem Profil des Rotorblatts im nabennahen Bereich entspricht.

14. Windenergieanlage nach Anspruch 13,
**dadurch gekennzeichnet, dass** der Teil des Rotorblatts, welcher auf der Nabenverkleidung ausgebildet ist, feststeht und im Wesentlichen so ausgerichtet ist, dass er bei Stellung des Rotorblatts bei Nennwindgeschwindigkeit unterhalb der Nennwindgeschwindigkeit direkt unterhalb des nabennahen Bereichs des Rotorblatts der Windenergieanlage liegt.
